# EUROPEAN PATENT SPECIFICATION

(11) **EP 2 420 434 B1**
(45) Date of publication and mention of the grant of the patent: **17.09.2014**
(21) Application number: 10173141.2
(22) Date of filing: 18.08.2010
(51) Int. Cl.: B62D 29/00, B62D 27/02, F16B 5/02, B62D 25/06

(54) **Fixing arrangement, roof arrangement of an automotive vehicle and method for fixing an aluminium roof panel to a steel body part**
Befestigungsanordnung, Dachanordnung eines Pkw und Verfahren zur Befestigung einer Aluminumdachplatte an ein Stahlkörperteil
Agencement de fixation, agencement de toit de véhicule automobile et procédé de fixation d'un panneau de toit en aluminium sur une pièce de carrosserie en acier

(43) Date of publication of application: 22.02.2012
(73) Proprietor: Aleris Aluminum Duffel BVBA, 2570 Duffel (BE)
(72) Inventor: Baldwin, Michael John, 1951 MJ Velsen-Noord (NL)
(74) Representative: Müller Schupfner & Partner Patent- und Rechtsanwaltspartnerschaft mbB

(56) References cited:
- EP-A1- 2 228 546
- DE-A1- 19 939 977
- JP-A- 58 101 873
- JP-A- 61 024 671
- JP-A- 2004 042 695

## Description

The present invention relates to a fixation arrangement for vehicle body panels, and in particular to a fixation arrangement for joining vehicle body panels made of aluminium or aluminium alloy to a steel body side. Moreover, the present invention discloses a roof arrangement comprising a roof side rail made of steel, a roof panel made of aluminium or aluminium alloy and at least one fixation arrangement. Furthermore, the present invention relates to a method for fixing a roof panel made of aluminium or aluminium alloy to a steel body part.

There is a growing demand to use body panels made of aluminium or aluminium alloy to minimize the weight of the automotive vehicle. However, because body panels made of aluminium or aluminium alloy may not be able to provide an adequate vehicle body strength by themselves, it has been proposed to use steel panels for major frame components and selectively use body panels made of aluminium or aluminium alloy only in parts, such as the outer roof panel, that do not require a high mechanical strength and have large surface areas. However, the expansion properties of steel and aluminium or aluminium alloy are different. In particular, there is the problem that aluminium has a thermal expansion coefficient twice that from steel. Therefore, if an aluminium roof on a steel body part runs through the paint line of the original equipment manufacturer (OEM), there will be tensions in the aluminium panel due to the thermal expansion differences. If these tensions exceed the yield strength of the material there will remain plastic deformation after cooling to room temperature. These local plastic deformations result in shape distortion and/or buckling of the roof panel, which is unacceptable.

The purpose of the invention to provide a fixation arrangement, a roof arrangement for an automotive vehicle as well as a method for fixing a roof panel to a steel body part which overcome the disadvantages previously mentioned.

The state of the art discloses different solutions for connecting body panels made of aluminium or aluminium alloy to steel body parts of an automotive vehicle.

DE 199 39 978 discloses that a motor vehicle body with roof aperture is constructed, and the aperture is closed with a roof element. Before the closing process, a steel roof element carrier is permanently fastened to the body, to form a roof frame around the aperture. A roof element of light-weight material is placed on a bracket section around the roof aperture, and permanently connected to the roof frame. The roof element carrier is fabricated from a profiled sheet steel section, which is closed to form a frame. The roof element is of light material, preferably aluminium or magnesium.

EP 1 953 072 discloses a welding arrangement for vehicle body panels. In this arrangement, the outer panel of the roof side rail is made of galvannealed steel sheet that has a favourable property but cannot be favourably welded to the aluminium roof outer panel, but the inner panel of the roof side rail is made of non-galvannealed steel sheet that can be favourably welded to the aluminium roof outer panel. Flanges of the outer panel and inner panel overlap each other, and the flange of the outer panel is provided with a plurality of notches along an edge of the outer panel. A corresponding flange of the roof outer panel is welded to the parts of the inner panel exposed by the notches of the outer panel.

EP 2 030 877 discloses a vehicle frame with a roof element, wherein the frame has a roof element fixed on a base structure by a longitudinal profile, where the element and the structure are connected together by an adhesive bond. One of the element and the structure is engaged with a roof section in a channel- or groove shaped annular cavity of another element and/or another structure. A space is formed between the element and the structure, and has a moulded layer as an adhesive body from an adhesive connection. The body is made of adhesive of polyurethane base. The structure is made of steel or aluminium sections.

DE 10 2004 019 818 discloses a device for connecting of a roof frame to a roof outer skin on the body of a motor vehicle, whereby a downwards protruding section of the roof frame extends parallel to a downwards bent flange of the roof outer skin, and the roof outer skin is rigidly connected to the roof frame. The roof outer skin is made from an aluminium alloy, and a roof frame is made from steel. The connection is formed by a soldered fillet connection between the outer skin and section of the roof frame.

EP 1 580 102 teaches a method that involves forming flanges on the longitudinal edges of a roof, and assembling L-shaped aluminium sections on the flanges. The roof and the section assembly are placed between steel dome arches of a side panel by interposing a glue seal between a branch of each section and an inner groove of upper crosspieces of the arches, after assembling the panel. The branch is then fixed on the inner grooves by screwing.

JP 58-101873 discloses that the deformation of an outer panel can be prevented by providing, in an inner panel, weakened joint parts adapted to be mated to the outer panel so that contraction stress and differences in thermal expansion are absorbed by these parts. The joint parts are bonded to the outer panel with the use of a mastic sealer.

JP 61-024671 discloses that a panel can be prevented from being deformed upon contraction of an adhesive charged between the panel and a reinforcing member, by providing, on the reinforcing member, a means for permitting the adhesive to contact.

The present invention deals with the problems that occur during a paint baking process of an aluminium or aluminium alloy panel joined to a steel body side. Due to the different thermal expansion coefficients of the aluminium or aluminium alloy panel and the steel body part plastic deformations occur which result in shape distortions and/or buckling of the panel. The purpose of the present invention is to reduce or avoid these local plastic deformations by proposing a fixation arrangement that allows "free" movement following the thermal expansions during paint bake.

Thus, the present invention discloses a fixation arrangement for joining an aluminium or aluminium alloy panel to a steel body part of an automotive vehicle, comprising a section of the steel body part, in which at least three cut-outs having an elongated shape are arranged around a location of a fixation means which is suitable for placing a fixation means to attach the steel body part to the aluminium or the aluminium alloy panel, wherein the fixation means is like a rivet, a self-piercing rivet, or a screw, and wherein the cut-outs are radially distributed around the location of the fixation means and are located at a distance of around 10 to 20 mm from the location of the fixation means.

The invention also discloses a roof arrangement of an automotive vehicle comprising a roof side rail made of steel, an aluminium or aluminium alloy roof panel and ate least one fixation arrangement.

Moreover, the present invention relates to a method for fixing a roof panel to a steel body part of an automotive vehicle.

In an embodiment the steel body part is a roof side rail and the roof panel, preferably an outer roof panel, is made of an aluminium alloy of the AA6xxx or AA7xxx series.

The fixation arrangement of the present invention allows to compensate the different thermal expansions of the aluminium or aluminium alloy panel and the steel body part. Accordingly, it is possible for the two components to move up to a certain extent during paint bake, i.e. a flexible fixation arrangement between the two components is provided. Such a free movement is achieved by providing at least three cut-outs arranged around a location of a fixation means. The cut-outs are located in a section of the steel body part and can act as a spring that absorbs the thermal expansion differences during paint bake.

The location of a fixation means is suitable for placing a fixation means, which could be a rivet, a self-piercing rivet or a screw, to attach the steel body part to the aluminium or aluminium alloy panel. The cut-outs are specially designed, having an elongated shape. In a preferred embodiment the elongated cut-outs have a width of about 2 to 8 mm and the distance between the individual cut-outs is about 3 to 10 mm. The cut-outs are radially distributed around the location of a fixation means. In an embodiment, the cut-outs can have an L-shaped or an S-shaped form. In the embodiment wherein the cut-outs have an L-shaped form, the length of one cut-out is just until it reaches the next cut-out leaving about 3 to 10 mm material in between. In case of the L-shaped cut-outs each cut-out have a long leg and a short leg, whereby the angle between the long leg and the short leg is about between 20° and 170°.

Further, the cut-outs have a radial distance of about 10 to 20 mm from the location of a fixation means. In another embodiment, the section of the steel body part contains four, five or six cut-outs. A rivet, a self-piercing rivet, or a screw fixes the aluminium or aluminium alloy panel, preferably an outer roof panel, to the steel body part, preferably a roof side rail. According to a preferred embodiment a self-piercing rivet is used.

The present invention also provides a roof arrangement comprising a roof side rail made of steel, a roof panel made of aluminium or aluminium alloy and at least one fixation arrangement. The roof panel is preferably an outer roof panel. In an embodiment the outer roof panel is made of an AA6xxx or AA7xxx alloy. Preferably the roof side rail has several fixation arrangements over the length of the automotive vehicle.

Furthermore, the present invention discloses a method of fixing a roof panel to a body steel part comprising the provision of a steel body part of an automotive vehicle. In at least one section of the steel body part at least three cut-outs having an elongated shape are punched spaced apart from each other around a location of a fixation means into the steel body part wherein the cut-outs are radially distributed around the location of the fixation means and are located at a distance of around 10 to 20 mm from the location of the fixation means. Then, an aluminium or aluminium alloy panel is placed on the roof side rail and fixed by applying rivets or screws to the points of fixings. Accordingly, the steel body part and the roof panel are joined.

The steel body part is preferably a roof side rail and the roof panel an outer roof panel made of an AA6xxx or AA7xxx alloy.

In an embodiment of the method according to the present invention, a low modulus adhesive is applied between the roof panel and the body steel part.

An advantage of the method according to the present invention is that it does not add costs to the established processes. For example, the cut-outs can be done during the last pressing/trimming step of the steel body part and further conventional self-piercing rivets can be used for fixing the steel body part to the roof panel. In addition a low modulus adhesive can be used which is placed between the steel body side and the aluminium or aluminium alloy panel.

Preferred embodiments of the invention will be described in the following with reference to the appended drawings, in which:
- Fig. 1: is a perspective sectional view of the fixation arrangement according to the present invention;
- Fig. 2: is a perspective sectional view of the fixation arrangement of Fig. 1 showing additionally the partially removed aluminium or aluminium alloy roof panel; and
- Fig. 3: is a perspective view of an automotive vehicle to which the fixation arrangement of the present invention is applied.

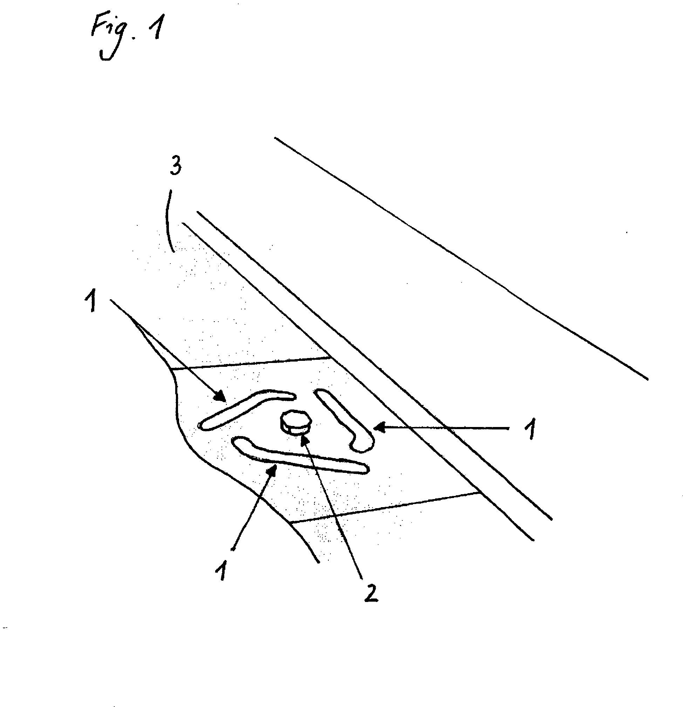

Fig. 1 shows a section of a steel side rail of an automotive vehicle 3. The side rail 3 is one of the roof side rails of an automotive vehicle. In the roof side rail 3 three cut-outs 1 are punched around a location of a fixation means 2. The cut-outs show a L-shaped form having a width of 5 mm and a length just until the next cut-out leaving about 5 mm material in between. In this embodiment the fixing, which is a self piercing rivet, is already fixed at the location of the fixation means. The distance to the self piercing rivet is about 15 mm.

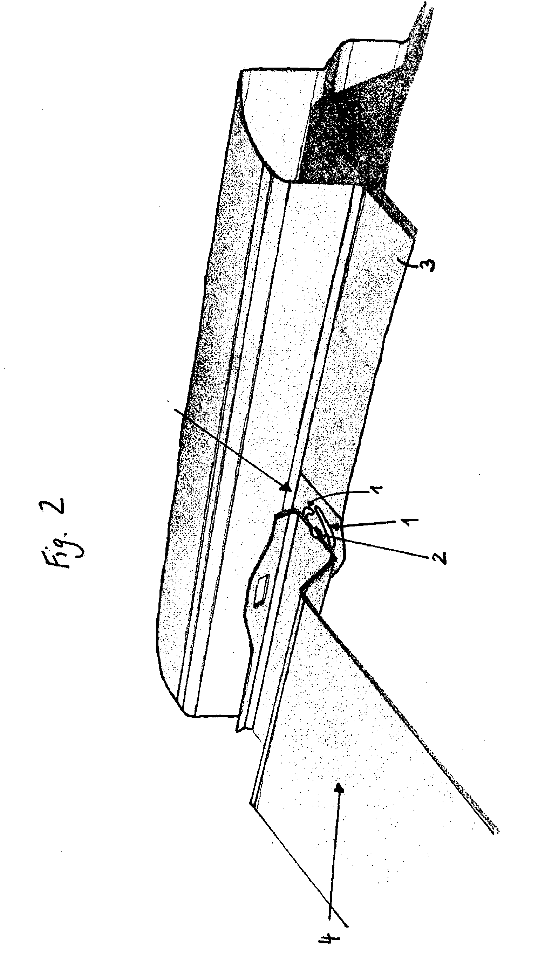

Fig. 2 shows part of the roof construction comprising the steel side rail 3, the location of a fixation means 2, parts of the cut-outs 1 and a part of the aluminium or aluminium alloy outer roof panel 4. The outer roof panel 4 is partially removed so that the location of a fixation means 2 and parts of the cut-outs 1 can be seen. In this case the self piercing rivet attaches the steel side rail 3 to the aluminium or aluminium alloy outer roof panel. Fig. 1 is an enlargement of Fig. 2 showing the section of the steel side rail having the claimed fixation arrangement (outer roof panel removed in Fig. 1)

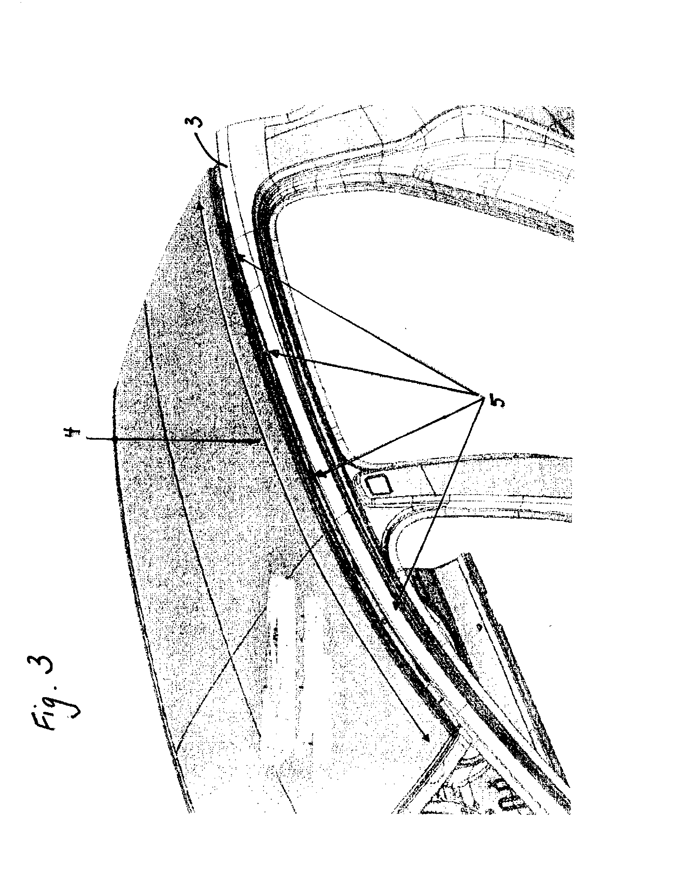

Fig. 3 shows a roof arrangement of an automotive vehicle embodying the present invention. The automotive vehicle comprises an outer roof panel 4 made of aluminium or aluminium alloy, a roof side rail made of steel 3 and four fixation arrangements 5 according to the present invention.

## Claims

1. A fixation arrangement for joining an aluminium or aluminium alloy panel to a steel body part (3) of an automotive vehicle, comprising a section of the steel body part, in which at least three cut-outs each having an elongated shape are arranged around a location of a fixation means attaching the steel body part to the aluminium or aluminium alloy panel (4), wherein the fixation means (2) is like a rivet, a self-piercing rivet, or a screw, and wherein the cut-outs (1) are radially distributed around the location of the fixation means and are located at a distance of around 10 to 20 mm from the location of the fixation means.

2. The fixation arrangement according to claim 1, wherein the elongated cut-outs (1) have a width of about 2 to 8 mm.

3. The fixation arrangement according to any one of the preceding claims, wherein the distance between the individual cut-outs (1) is about 3 to 10 mm.

4. The fixation arrangement according to any one of the preceding claims, wherein the fixation means (2) is a rivet, a self-piercing rivet, or a screw.

5. The fixation arrangement according to any one of the preceding claims, wherein the cut-outs (1) have an L-shaped or an S-shaped form.

6. The fixation arrangement according to any one of the preceding claims, wherein the section of the steel body part (3) contains four, five or six cut-outs (1).

7. The fixation arrangement according to any one of the preceding claims, wherein the steel body part is the roof side rail (3) of an automotive vehicle.

8. The fixation arrangement according to any one of the preceding claims, wherein the aluminium alloy panel (4) is an AA6xxx or AA7xxx alloy panel.

9. A roof arrangement of an automotive vehicle comprising a roof panel (4) made of aluminium or an aluminium alloy, a roof side rail (3) made of steel, and at least one fixation arrangement according to anyone claims 1 to 8.

10. Method of fixing a roof panel made of aluminium or an aluminium alloy to a steel body part comprising:
(a) providing a steel body part of an automotive vehicle;
(b) punching at least three cut-outs (1) each having an elongated shape around a location of a fixation means into at least one section of the steel body part, wherein the cut-outs are radially distributed around the location of the fixation means (2) and are located at a distance of around 10 to 20 mm from the location of the fixation means;
(c) applying rivets or screws to the location of the fixation means for joining the roof panel (4) to the steel body part (3).

11. Method according to claim 11, wherein during step (c) additionally a low modulus adhesive is applied.

12. Method according to claim 10 or 11, wherein the steel body part is a roof side rail (3) of an automotive vehicle and the roof panel is an outer roof panel (4) made of an AA6xxx or AA7xxx alloy.

## Patentansprüche

1. Befestigungsanordnung zum Verbinden eines Paneels aus Aluminium oder Aluminiumlegierung mit einem Stahlkarosserieteil (3) eines Kraftfahrzeugs, die einen Abschnitt des Stahlkarosserieteils aufweist, in dem mindestens drei Ausschnitte von jeweils länglicher Form um einen Einbauort einer Befestigungseinrichtung herum angeordnet sind, die das Stahlkarosserieteil an dem Aluminium- oder Aluminiumlegierungspaneel (4) befestigt, wobei die Befestigungseinrichtung (2) wie eine Niete, eine Stanzniete oder eine Schraube ist, und wobei die Ausschnitte (1) radial um den Einbauort der Befestigungseinrichtung herum verteilt sind und sich in einem Abstand von etwa 10 bis 20 mm vom Einbauort der Befestigungseinrichtung befinden.

2. Befestigungsanordnung nach Anspruch 1, wobei die länglichen Ausschnitte (1) eine Breite von etwa 2 bis 8 mm haben.

3. Befestigungsanordnung nach einem der vorhergehenden Ansprüche, wobei der Abstand zwischen den einzelnen Ausschnitten (1) etwa 3 bis 10 mm beträgt.

4. Befestigungsanordnung nach einem der vorhergehenden Ansprüche, wobei die Befestigungseinrichtung (2) eine Niete, eine Stanzniete oder eine Schraube ist.

5. Befestigungsanordnung nach einem der vorhergehenden Ansprüche, wobei die Ausschnitte (1) eine L- oder eine S-Form haben.

6. Befestigungsanordnung nach einem der vorhergehenden Ansprüche, wobei der Abschnitt des Stahlkarosserieteils (3) vier, fünf oder sechs Ausschnitte (4) enthält.

7. Befestigungsanordnung nach einem der vorhergehenden Ansprüche, wobei das Stahlkarosserieteil die Dachseitenschiene (3) eines Kraftfahrzeugs ist.

8. Befestigungsanordnung nach einem der vorhergehenden Ansprüche, wobei das Aluminiumlegierungspaneel (4) ein Paneel aus AA6xxx- oder AA7xxx-Legierung ist.

9. Dachanordnung eines Kraftfahrzeugs, die ein Dachpaneel (4) aus Aluminium oder einer Aluminiumlegierung, eine Dachseitenschiene (3) aus Stahl und mindestens eine Befestigungsanordnung nach einem der Ansprüche 1 bis 8 aufweist.

10. Verfahren zur Befestigung eines Dachpaneels aus Aluminium oder einer Aluminiumlegierung an einem Stahlkarosserieteil, das aufweist:
(a) Bereitstellen eines Stahlkarosserieteils eines Kraftfahrzeugs;
(b) Stanzen von mindestens drei Ausschnitten (1) jeweils von länglicher Form um einen Einbauort einer Befestigungseinrichtung in mindestens einen Abschnitt des Stahlkarosserieteils herum, wobei die Ausschnitte radial um den Einbauort der Befestigungseinrichtung (2) verteilt sind und sich in einem Abstand von etwa 10 bis 20 mm vom Einbauort der Befestigungseinrichtung befinden;
(c) Anbringen von Nieten oder Schrauben am Einbauort der Befestigungseinrichtung zur Verbindung des Dachpaneels (4) mit dem Stahlkarosserieteil (3).

11. Verfahren nach Anspruch 11, wobei während des Schritts (c) zusätzlich ein Niedrigmodul-Klebstoff aufgebracht wird.

12. Verfahren nach Anspruch 10 oder 11, wobei das Stahlkarosserieteil eine Dachseitenschiene (3) eines Kraftfahrzeugs und das Dachpaneel ein äußeres Dachpaneel (4) aus einer AA6xxx- oder AA7xxx-Legierung ist.

## Revendications

1. Agencement de fixation pour réunir un panneau en aluminium ou en alliage d'aluminium à une partie de corps en acier (3) d'un véhicule automobile, comprenant une section de la partie de corps en acier, dans lequel au moins trois découpes ayant chacune une forme allongée sont agencées autour d'un emplacement d'un moyen de fixation qui attache la partie de corps en acier au panneau d'aluminium ou d'alliage d'aluminium (4), dans lequel le moyen de fixation (2) est semblable à un rivet, un rivet auto-perceur ou une vis, et dans lequel les découpes (1) sont distribuées radialement autour de l'emplacement du moyen de fixation et sont situées à une distance d'environ 10 à 20 mm depuis l'emplacement du moyen de fixation.

2. Agencement de fixation selon la revendication 1, dans lequel les découpes allongées (1) ont une largeur d'environ 2 à 8 mm.

3. Agencement de fixation selon l'une quelconque des revendications précédentes, dans lequel la distance entre les découpes individuelles (1) est d'environ 3 à 10 mm.

4. Agencement de fixation selon l'une quelconque des revendications précédentes,
dans lequel le moyen de fixation (2) est un rivet, un rivet auto-perceur ou une vis.

5. Agencement de fixation selon l'une quelconque des revendications précédentes, dans lequel les découpes (1) ont une forme en L ou une forme en S.

6. Agencement de fixation selon l'une quelconque des revendications précédentes, dans lequel la section de la partie de corps en acier (3) contient quatre, cinq ou six découpes (1).

7. Agencement de fixation selon l'une quelconque des revendications précédentes, dans lequel la partie de corps en acier est un rail latéral de toiture (3) d'un véhicule automobile.

8. Agencement de fixation selon l'une quelconque des revendications précédentes, dans lequel le panneau en alliage d'aluminium (4) est un panneau en alliage AA6xxx ou AA7xxx.

9. Agencement de toiture d'un véhicule automobile comprenant un panneau de toiture (4) réalisé en un aluminium ou en alliage d'aluminium, un rail latéral de toiture (3) réalisé en acier, et au moins un agencement de fixation selon l'une quelconque des revendications 1 à 8.

10. Procédé pour fixer un panneau de toiture réalisé en aluminium ou en alliage d'aluminium sur une partie de corps en acier, comprenant les étapes consistant à :
a) fournir une partie de corps en acier d'un véhicule automobile ;
b) poinçonner au moins trois découpes (1) ayant chacune une forme allongée autour d'un emplacement d'un moyen de fixation dans au moins une section de la partie de corps en acier, de sorte que les découpes sont radialement distribuées autour de l'emplacement du moyen de fixation (2) et sont situées à une distance d'environ 10 à 20 mm depuis l'emplacement du moyen de fixation;
c) appliquer des rivets ou des vis à l'emplacement du moyen de fixation pour réunir le panneau de toiture (4) à la partie de corps en acier (3).

11. Procédé selon la revendication 11, dans lequel on applique additionnellement pendant l'étape c) un adhésif à faible module.

12. Procédé selon la revendication 10 ou 11, dans lequel la partie de corps en acier est un rail latéral de toiture (3) d'un véhicule automobile, et le panneau de toiture est un panneau de toiture extérieure (4) réalisé en alliage AA6xxx ou AA7xxx.
